# EUROPEAN PATENT SPECIFICATION

(11) **EP 2 280 205 B1**
(45) Date of publication and mention of the grant of the patent: **23.01.2013**
(21) Application number: 10168448.8
(22) Date of filing: 05.07.2010
(51) Int. Cl.: F16K 11/044, F16K 11/048

(54) **Diverter valve and heating system**
Umlenkventil und Heizsystem
Soupape de dériveur et système de chauffage

(30) Priority: 30.07.2009 GB 0913208
(43) Date of publication of application: 02.02.2011
(73) Proprietor: Davidson, Matthew, St Johns Worcester Worcestershire WR2 5PT (GB)
(72) Inventor: Davidson, Matthew, St Johns Worcester Worcestershire WR2 5PT (GB)
(74) Representative: Jackson, Derek Charles

(56) References cited:
- DE-A1-102005 003 982
- DE-U1- 20 316 341
- US-A1- 2003 150 498

## Description

This invention relates to a diverter valve and to a heating system employing such a valve.

New technology in water heating, such as heat pumps, can significantly improve the cost efficiency of heating buildings and/or providing hot water. Although installation into a new building is straightforward, fitting such technology to existing buildings is troublesome. In order to keep costs to a minimum it is generally necessary to retain an existing boiler and heating system and the new technology is required to provide a secondary source of relatively higher efficiency heating.

DE102005003982-A1 describes a pneumatic directional valve for the switching of a compressed air flow between several external connections installed on a valve housing by means of a valve spool axially movable in a bore in the housing. The valve spool has at least one control pressure piston which, in addition to the movement of the valve spool via a rear section, also serves as a shut-off component for a valve seat for switching of the compressed air flow.

DE20316341-U1 describes a valve comprising a housing with six connections, where four connections are at one side and the other two are at the opposite side. The valve housing is separated in the centre by a seal washer, hence resulting in separation of the volume flow.

US2003/0150498-A1 describes a pneumatic valve assembly including a valve body having an inlet port in fluid communication with a source of pressurised air and a valve bore extending axially within the valve body with a valve member movable between predetermined positions within the valve bore. The valve member is selectively movable to direct a flow of pressurised air from the inlet port through the valve bore to an outlet port. A valve element is disposed upon the valve member having an angular sealing surface, and a valve seat is defined in the valve bore formed at an oblique angle to provide a sealing contact with the valve sealing surface when the valve member is in a closed position thereby interrupting the flow of pressurised air.

It is therefore an object of the present invention to provide a diverter valve which overcomes, or at least ameliorates, the above problems and a heating system incorporating such a diverter valve.

According to one aspect of the present invention there is provided a diverter valve comprising: a valve body defining first, second and third inlets and first and second outlets and a plurality of passages; and first and second interconnected valve members within the valve body, the valve members being jointly movable between first and second positions, wherein, in the first position, the first valve member blocks a passage between the first inlet and the first outlet and opens a passage between the third inlet and the first outlet, while the second valve member blocks a passage between the second inlet and the second outlet and opens a passage between the first inlet and the second outlet, whereby fluid is able to pass from the first inlet to the second outlet and from the third inlet to the first outlet, and, in the second position, the first valve member blocks the passage between the third inlet and the first outlet and opens the passage between the first inlet and the first outlet, while the second valve member blocks the passage between the first inlet and the second outlet and opens the passage between the second inlet and the second outlet, whereby fluid is able to pass from the second inlet to the second outlet and from the first inlet to the first outlet.

The valve may include an injector in the second inlet.

The valve may include means, such as a coil spring, for biasing the valve members to the first position.

The valve members may be interconnected by a shaft.

One of the valve members may be positioned between the second inlet and the second outlet, the valve member being substantially conical, for example for sealing with the injector.

The valve members may be movable between the first and second positions by fluid pressure, for example solely by fluid pressure.

Alternatively or additionally, the valve may include actuating means for moving the valve members between the first and second positions. The actuating means may comprise a solenoid or a thermostatic device. Where the thermostatic device is provided, a by-pass may be provided in the second inlet to allow flow of (a relatively small amount of) fluid.

The valve members may be provided within a cartridge which may be, for example, cylindrical.

The valve members may be in the form of plate members which are movable in a linear manner, for example in a direction substantially perpendicular to the plane thereof. Alternatively, the valve members may be in the form of flap members which are pivotal about an edge region thereof.

A sealing member may be provided in a peripheral region of the valve members. The sealing member may be elastomeric material, for example rubber.

According to another aspect of the present invention there is provided a heating system including a diverter valve as hereinbefore defined, a primary source of heating fluid, a secondary source of heating fluid, and a fluid distribution circuit, the secondary source being connected to the first inlet and the first outlet, and the primary source being connected to the second inlet and the third inlet, and the fluid distribution system being connected to the second outlet and the third inlet.

The primary source of heating fluid may comprise a source of relatively high-temperature fluid and the secondary source of heating fluid may comprise a source of relatively low-temperature fluid.

The primary source of heating fluid may comprise a conventional heating boiler.

The secondary source of heating fluid may comprise a heat pump, such as an air source heat pump.

The fluid distribution circuit may comprise a hot water and/or a heating circuit.

For a better understanding of the present invention and to show more clearly how it may be carried into effect reference will now be made, by way of example, to the accompanying drawings in which:

Figure 1 is a diagrammatic cross-sectional view of one embodiment of a diverter valve according to the present invention;

Figure 2 is a diagrammatic cross-sectional view of another embodiment of a diverter valve according to the present invention provided with biasing means;

Figure 3 is a diagrammatic cross-sectional view of a modification of the diverter valve shown in Figure 2;

Figure 4 is a diagrammatic cross-sectional view of another embodiment of a diverter valve according to the present invention provided with actuating means;

Figure 5 is a diagrammatic cross-sectional view of an alternative modificati on of the diverter valve shown in Figure 2;

Figure 6 is a diagrammatic cross-sectional view of a further embodiment of a diverter valve according to the present invention, provided with flap valve members;

Figure 7 is a diagrammatic cross-sectional view of another embodiment of a diverter valve according to the present invention provided with actuating means in the form of a liquid expansion device; and

Figure 8 is a diagrammatic illustration of a heating system according to the present invention incorporating a diverter valve.

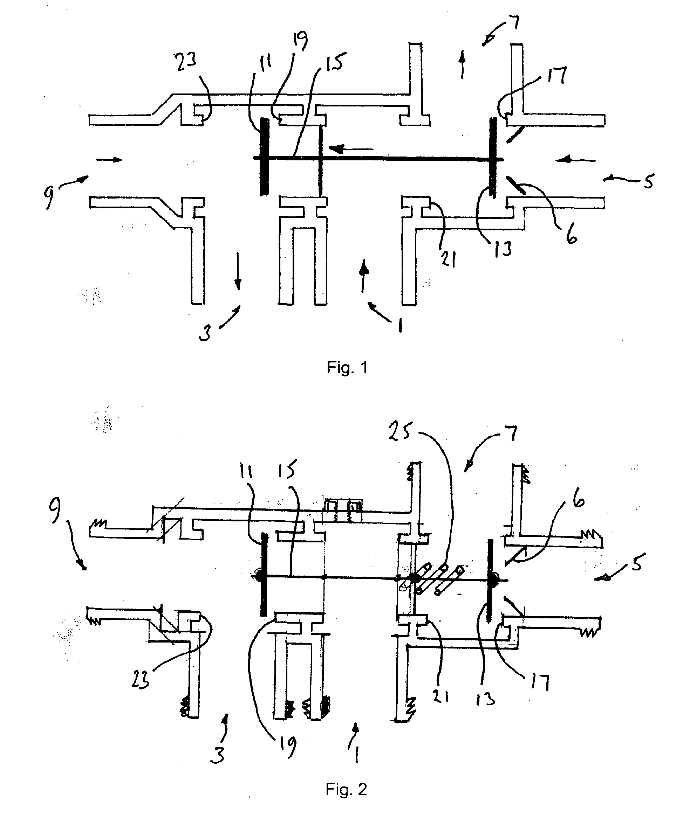

The diverter valve shown in Figure 1 is adapted to control the directional movement of fluid for separately connecting primary and secondary heati ng fluid sources to a single output. The secondary heating fluid source is generally a relatively low-temperature source, such as a heat pump, especially an air source heat pump, and the primary heating fluid source is generally relatively high-temperature source, such as a boiler.

The valve has a body including a first inlet 1 for fluid, such as water, from a secondary heating fluid source, and an adjoining first outlet 3 for returning the (relatively low-temperature) fluid to its source, the inlet and outlet being interconnected by a flow path through the valve. The valve body also includes a second inlet 5 for fluid, such as water, from a primary heating fluid source, the inlet including an injector 6 for providing a relatively high flow rate of fluid exiting the injector.

The valve body has a second outlet 7 for connection to a fluid distribution circuit, for example a hot water system, such as a domestic hot water system, and a third inlet 9 for connection to returning fluid from the fluid distribution circuit. The outlet 7 is in fluid connection with both inlet 1 and inlet 5 and the inlet 9 is in fluid connection with the outlet 3.

Fluid flow through the valve is controlled by means of two valve members 11, 13 which are interconnected by a shaft 15, such as a rod, and which seal against alternate pairs of valve seats 17, 19 and 21, 23 as a result of movement of the shaft 15 and the valve members 11, 13 between a first position and a second position. The valve members are in the form of plates which are movable in a direction substantially perpendicular to the plates, that is in the axial direction of the shaft.

When only the secondary source is operating, the valve members are in their first position (moved to the right as shown in Figure 1) with valve member 11 seated against valve seat 19 and valve member 13 seated against valve seat 17. In this configuration, (relatively low-temperature) fluid flows from inlet 1 to outlet 7 and through the fluid distribution circuit and returns through inlet 9 to outlet 3 to be further heated by the secondary source. In this way, when only the secondary source is operating, the fluid in the fluid distribution circuit is heated to a first (relatively low) temperature, but in a cost-effective way thereby providing preliminary heating for the overall system.

When only the primary source is operating, the valve members are in their second position (moved to the left as shown in Figure 1) with the valve member 11 seated against valve seat 23 and valve member 13 seated against valve seat 21. In this configuration, (relatively high-temperature) fluid flows from the inlet 5 to the outlet 7, while the inlet 9 is closed and returning fluid flows back to the primary source externally of the valve.

The valve members 11, 13 may be moved between their first and second positions in any convenient way, including fluid pressure or a separate actuator means. Where the fluid from the primary source is at a higher pressure than the fluid from the secondary source, the valve members may be biased to the first position, for example by a coil spring 25 as shown in Figure 2. In this way, when only the secondary source is operating the valve members are in their first position and when the primary source replaces the secondary source, the higher fluid pressure causes the valve members 11, 13 to move to their second position until the primary source is turned off, when the valve members return to the first position.

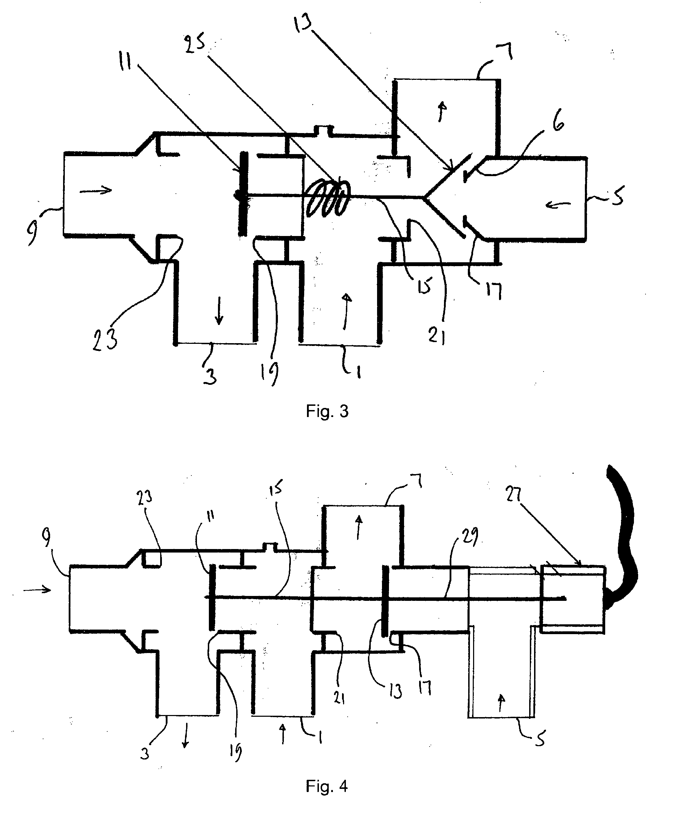

Figure 3 shows a modification of the valve shown in Figure 2 in which the valve member 13 and valve seats 17, 21 have a modified configuration and the coil spring 25 is in an alternative location. As can be seen from the figure, the valve member 13 is substantially conical and seats against the injector 6.

Figure 4 shows an actuator 27 in the form of a solenoid which is connected to the shaft 15 by an extension shaft 29 for moving the valve members 11, 13 between the first and second positions in response to a control signal, for example a control signal switching between the secondary and primary sources.

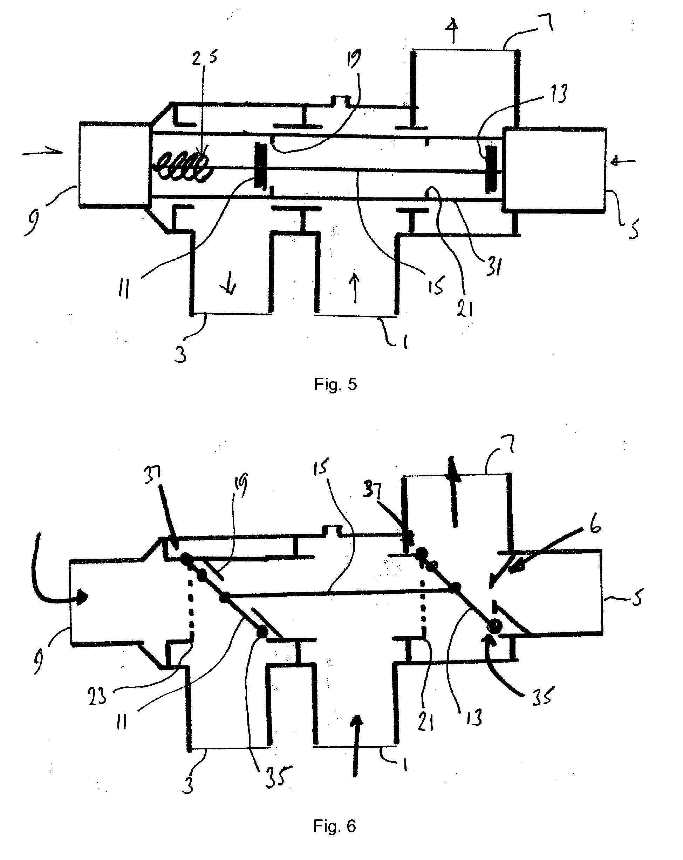

Figure 5 shows an alternative modification of the valve shown in Figure 2 in which the valve members 11, 13, shaft 15, valve seats 19, 21 and spring 25 are mounted within a cartridge 31 which is constructed, for example with apertures (not shown) to provide minimal resistance to fluid flow. It will be noted the valve seats 17 and 23 have been omitted because they are not essential to the operation of the valve.

Figure 6 shows a modified version of the diverter valve in which the valve members 11, 13 are in the form of flap valves interconnected by shaft 15 and rotatable about hinges 37 in an edge region thereof. In this embodiment the valve seats 17 and 19 are modified to be sealed by the valve members 11, 13 when the valve members are inclined. If required, the valve members may be provided in a peripheral region thereof with seals 35 of elastomeric material, such as rubber. The diverter valve is shown in its first position in which the low-temperature source is operating with water flowing from the secondary source, through the valve and out of the outlet 7, while returning water flows through the inlet 9 and through the outlet 3 back to the secondary heat source. Thus, the valve member 11 closes the path between the inlet 1 and outlet 3. In the second position of the diverter valve, as shown in dashed lines in Figure 6, water passes through the inlet 5 and injector 6 from the primary source and through the outlet 7 because the valve member 13 is sealed against the valve seat 21, while returning water by-passes the inlet 9 because the valve member 11 is sealed against the valve seat 23.

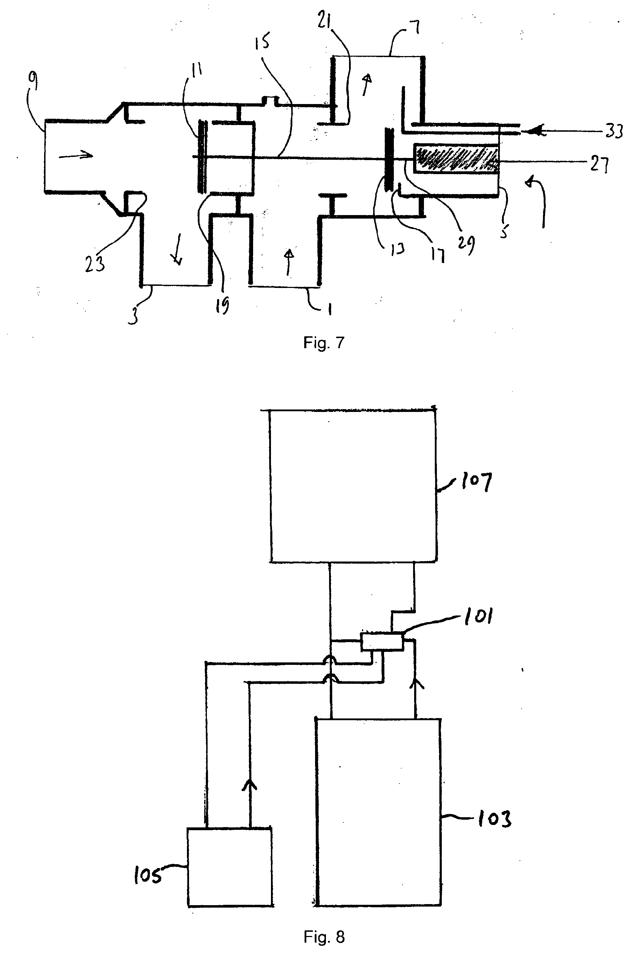

Figure 7 shows an actuator 27 in the form of a liquid expansion device connected to the shaft 15 by an extension shaft 29 for moving the valve members 11, 13 between the first and second positions. Liquid in the liquid expansion device expands in response to relatively hotter water from the primary source to move the valve members from the first position to the second position. In order to ensure the relatively hotter water reaches the liquid expansion device 27 a by-pass channel 33 is provided around valve seat 17 to allow a small flow of water when the primary source is turned on and before the valve members move to their second position.

It should be noted that a liquid expansion device is only one form of thermostatic device that could be employed, including mechanical, electro-mechanical and electronic thermostatic devices which are well known to the skilled person.

Figure 8 shows a heating system incorporating a diverter valve 101 such as a diverter valve as described and shown in relation to Figures 1 to 7. The heating system includes a primary source, for example of relatively high-temperature fluid, in the form of a boiler 103, such as a gas- or oil-fired boiler, a secondary source, for example of relatively low-temperature fluid, in the form of a heat pump 105, such as an air source heat pump, and a fluid distribution circuit in the form of a conventional heating circuit 107 including, for example a hot water circuit and/or a heating circuit which may include conventional radiators. The boiler 103 and heating circuit 107 are commonly found in domestic premises, but are difficult to link to heat pump 105 in the absence of diverter valve 101, especially when a buffer tank is not present as is the case with, for example, many heating systems incorporating condensing boilers. The boiler 103 is connected to inlet 5 of the valve and to inlet 9, although fluid does not flow into the inlet 9 when the boiler is in use. The heat pump is connected to the inlet 1 of the valve and to the outlet 3. The heating circuit is connected to the outlet 7 and to the inlet 9, although fluid does not flow into the inlet 9 when the boiler is in use.

In use of the heating system according to the present invention, the secondary source provides a heating system, for example a pre-heating system, which operates when the primary source is not operating. Consequently, the primary source does not need to heat the water from cold, but only, for example, from an intermediate temperature provided by the secondary source, thereby saving fuel and reducing heating and/or hot water costs.

## Claims

1. A diverter valve comprising: a valve body defining first (1), second (5) and third (9) inlets and first (3) and second (7) outlets and a plurality of passages; and first (11) and second (13) interconnected valve members within the valve body, the valve members being jointly movable between first and second positions, **characterised in that**, in the first position, the first valve member (11) blocks a passage between the first inlet (1) and the first outlet (3) and opens a passage between the third inlet (9) and the first outlet (3), while the second valve member (13) blocks a passage between the second inlet (5) and the second outlet (7) and opens a passage between the first inlet (1) and the second outlet (7), whereby fluid is able to pass from the first inlet to the second outlet and from the third inlet to the first outlet, and, in the second position, the first valve member (11) blocks the passage between the third inlet (9) and the first outlet (3) and opens the passage between the first inlet (1) and the first outlet (3), while the second valve member (13) blocks the passage between the first inlet (1) and the second outlet (7) and opens the passage between the second inlet (5) and the second outlet (7), whereby fluid is able to pass from the second inlet to the second outlet and from the first inlet to the first outlet.

2. A diverter valve as claimed in claim 1, wherein the valve includes an injector (6) in the second inlet (5).

3. A diverter valve as claimed in claim 1 or 3, wherein the valve includes means (25) for biasing the valve members (11, 13) to the first position.

4. A diverter valve as claimed in claim 3, wherein the biasing means comprises a coil spring (25).

5. A diverter valve as claimed in any preceding claim, wherein the valve members (11, 13) are interconnected by a shaft (15).

6. A diverter valve as claimed in any preceding claim, wherein the valve members (11, 13) are movable between the first and second positions solely by fluid pressure.

7. A diverter valve as claimed in any one of claims 1 to 5 and including actuating means (27) for moving the valve members (11, 13) between the first and second positions.

8. A diverter valve as claimed in any preceding claim, wherein the valve members (11, 13) are provided within a cartridge (31).

9. A diverter valve as claimed in any preceding claim, wherein a sealing member (35) is provided in a peripheral region of the valve members (11, 13).

10. A heating system including a diverter valve (101) as claimed in any preceding claim, a primary source (103) of heating fluid, a secondary source (105) of heating fluid, and a fluid distribution circuit (107), the secondary source being connected to the first inlet (1) and the first outlet (3), and the primary source being connected to the second inlet (5) and the third inlet (9), and the fluid distribution system being connected to the second outlet (7) and the third inlet (9).

11. A heating system as claimed in claim 10, wherein the primary source (103) of heating fluid comprises a source of relatively high-temperature fluid and the secondary source (105) of heating fluid comprises a source of relatively low-temperature fluid.

12. A heating system as claimed in claim 11, wherein the primary source (103) of heating fluid comprises a conventional heating boiler.

13. A heating system as claimed in claim 11 or 12, wherein the secondary source (105) of heating fluid comprises a heat pump, such as an air source heat pump.

## Patentansprüche

1. Umleitventil, das Folgendes umfasst: einen Ventilkörper, der einen ersten (1), zweiten (5) und dritten (9) Einlass sowie einen ersten (3) und zweiten (7) Auslass sowie mehrere Kanäle definiert; und ein erstes (11) und zweites (13) miteinander verbundene Ventilelemente in dem Ventilkörper, wobei die Ventilelemente zusammen zwischen ersten und zweiten Positionen beweglich sind, **dadurch gekennzeichnet, dass** das erste Ventilelement (11) in der ersten Position einen Durchgang zwischen dem ersten Einlass (1) und dem ersten Auslass (3) versperrt und einen Durchgang zwischen dem dritten Einlass (9) und dem ersten Auslass (3) öffnet, während das zweite Ventilelement (13) einen Durchgang zwischen dem zweiten Einlass (5) und dem zweiten Auslass (7) versperrt und einen Durchgang zwischen dem ersten Einlass (1) und dem zweiten Auslass (7) öffnet, so dass Fluid vom ersten Einlass zum zweiten Auslass und vom dritten Einlass zum ersten Auslass strömen kann, und das erste Ventilelement (11) in der zweiten Position den Durchgang zwischen dem dritten Einlass (9) und dem ersten Auslass (3) versperrt und den Durchgang zwischen dem ersten Einlass (1) und dem ersten Auslass (3) öffnet, während das zweite Ventilelement (13) den Durchgang zwischen dem ersten Einlass (1) und dem zweiten Auslass (7) versperrt und den Durchgang zwischen dem zweiten Einlass (5) und dem zweiten Auslass (7) öffnet, so dass Fluid vom zweiten Einlass zum zweiten Auslass und vom ersten Einlass zum ersten Auslass strömen kann.

2. Umleitventil nach Anspruch 1, wobei das Ventil einen Injektor (6) im zweiten Einlass (5) aufweist.

3. Umleitventil nach Anspruch 1 oder 3, wobei das Ventil Mittel (25) zum Vorspannen der Ventilelemente (11, 13) in die erste Position beinhaltet.

4. Umleitventil nach Anspruch 3, wobei das Vorspannmittel eine Spiralfeder (25) umfasst.

5. Umleitventil nach einem der vorherigen Ansprüche, wobei die Ventilelemente (11, 13) durch eine Welle (15) miteinander verbunden sind.

6. Umleitventil nach einem der vorherigen Ansprüche, wobei die Ventilelemente (11, 13) zwischen der ersten und der zweiten Position allein durch Fluiddruck beweglich sind.

7. Umleitventil nach einem der Ansprüche 1 bis 5 und mit Stellmitteln (27) zum Bewegen der Ventilelemente (11, 13) zwischen der ersten und der zweiten Position.

8. Umleitventil nach einem der vorherigen Ansprüche, wobei die Ventilelemente (11, 13) in einer Patrone (31) vorgesehen sind.

9. Umleitventil nach einem der vorherigen Ansprüche, wobei ein Dichtungselement (35) in einer peripheren Region der Ventilelemente (11, 13) vorgesehen ist.

10. Heizsystem mit einem Umleitventil (101) nach einem der vorherigen Ansprüche, einer primären Heizfluidquelle (103) und einer sekundären Heizfluidquelle (104) sowie einem Fluidverteilungskreislauf (107), wobei die sekundäre Quelle mit dem ersten Einlass (1) und dem ersten Auslass (3) verbunden ist und wobei die primäre Quelle mit dem zweiten Einlass (5) und dem dritten Einlass (9) verbunden ist und wobei das Fluidverteilungssystem mit dem zweiten Auslass (7) und dem dritten Einlass (9) verbunden ist.

11. Heizsystem nach Anspruch 10, wobei die primäre Heizfluidquelle (103) eine Quelle von Fluid mit relativ hoher Temperatur umfasst und die sekundäre Heizfluidquelle (105) eine Quelle von Fluid mit relativ niedriger Temperatur umfasst.

12. Heizsystem nach Anspruch 11, wobei die primäre Heizfluidquelle (103) einen herkömmlichen Heizkessel umfasst.

13. Heizsystem nach Anspruch 11 oder 12, wobei die sekundäre Heizfluidquelle (105) eine Wärmepumpe wie z.B. eine Luftquellenwärmepumpe umfasst.

## Revendications

1. Inverseur comprenant : un corps de soupape définissant des première (1), deuxième (5) et troisième (9) entrées, et des première (3) et seconde (7) sorties, et une pluralité de passages ; et des premier (11) et second (13) éléments de soupape interconnectés au sein du corps de soupape, les éléments de soupape étant mobiles ensemble entre des première et seconde positions, **caractérisé en ce que**, dans la première position, le premier élément de soupape (11) bloque un passage entre la première entrée (1) et la première sortie (3), et ouvre un passage entre la troisième entrée (9) et la première sortie (3), tandis que le second élément de soupape (13) bloque un passage entre la deuxième entrée (5) et la seconde sortie (7), et ouvre un passage entre la première entrée (1) et la seconde sortie (7), moyennant quoi du fluide est capable de passer de la première entrée à la seconde sortie et de la troisième entrée à la première sortie, et, dans la seconde position, le premier élément de soupape (11) bloque le passage entre la troisième entrée (9) et la première sortie (3), et ouvre le passage entre la première entrée (1) et la première sortie (3), tandis que le second élément de soupape (13) bloque le passage entre la première entrée (1) et la seconde sortie (7), et ouvre le passage entre la deuxième entrée (5) et la seconde sortie (7), moyennant quoi du fluide est capable de passer de la deuxième entrée à la seconde sortie et de la première entrée à la première sortie.

2. Inverseur selon la revendication 1, dans lequel la soupape inclut un injecteur (6) dans la deuxième entrée (5).

3. Inverseur selon la revendication 1 ou 2, dans lequel la soupape inclut un moyen (25) pour incliner les éléments de soupape (11, 13) vers la première position.

4. Inverseur selon la revendication 3, dans lequel le moyen d'inclinaison comprend un ressort hélicoïdal (25).

5. Inverseur selon l'une quelconque des revendications précédentes, dans lequel les éléments de soupape (11, 13) sont interconnectés par un arbre (15).

6. Inverseur selon l'une quelconque des revendications précédentes, dans lequel les éléments de soupape (11, 13) sont mobiles entre les première et seconde positions uniquement par pression fluidique.

7. Inverseur selon l'une quelconque des revendications 1 à 5 et incluant un moyen d'actionnement (27) pour déplacer les éléments de soupape (11, 13) entre les première et seconde positions.

8. Inverseur selon l'une quelconque des revendications précédentes, dans lequel les éléments de soupape (11, 13) sont prévus au sein d'une cartouche (31).

9. Inverseur selon l'une quelconque des revendications précédentes, dans lequel un élément d'étanchéité (35) est prévu dans une région périphérique des éléments de soupape (11, 13).

10. Système de chauffage incluant un inverseur (101) selon l'une quelconque des revendications précédentes, une source principale (103) de fluide chauffant, une source secondaire (105) de fluide chauffant et un circuit de distribution de fluide (107), la source secondaire étant connectée à la première entrée (1) et la première sortie (3), et la source principale étant connectée à la deuxième entrée (5) et la troisième entrée (9), et le système de distribution de fluide étant connecté à la seconde sortie (7) et la troisième entrée (9).

11. Système de chauffage selon la revendication 10, dans lequel la source principale (103) de fluide chauffant comprend une source de fluide à relativement haute température et la source secondaire (105) de fluide chauffant comprend une source de fluide à relativement basse température.

12. Système de chauffage selon la revendication 11, dans lequel la source principale (103) de fluide chauffant comprend une chaudière classique.

13. Système de chauffage selon la revendication 11 ou 12, dans lequel la source secondaire (105) de fluide chauffant comprend une pompe à chaleur, telle qu'une pompe à chaleur à source d'air.
